# NOUVEAU FASCICULE DE BREVET EUROPEEN

(11) **EP 1 884 425 B2**
(45) Date de publication et mention de la décision concernant l'opposition: **04.11.2015**
(45) Mention de la délivrance du brevet: 13.05.2009
(21) Numéro de dépôt: 07119017.7
(22) Date de dépôt: 08.09.2003
(51) Int. Cl.: B60S 1/40

(54) **Adaptateur pour la fixation d'un balai d'essuie glace sur un bras**
Adapter zur Befestigung eines Scheibenwischerblatts auf einem Arm
Adapter for fixing a windscreen-wiper blade on an arm

(30) Priorité: 12.09.2002 FR 0211405
(43) Date de publication de la demande: 06.02.2008
(62) Demande divisionnaire de: 03794998.9
(73) Titulaire: Valeo Systèmes d'Essuyage, 78321 La Verrière (FR)
(72) Inventeur: Vacher, Pascal, 63500 Issoire (FR)
(74) Mandataire: Rosolen-Delarue, Katell

(56) Documents cités:
- WO-A-01/15946
- DE-B- 1 058 382
- DE-B- 1 108 580
- FR-A- 2 070 567
- FR-A5- 2 070 567
- GB-A- 2 207 041
- US-A- 4 094 039

## Description

La présente invention se rapporte à un adaptateur pour la fixation d'un balai d'essuie glace sur un bras.

L'invention concerne également un bras d'essuyage portant un tel adaptateur ainsi qu'un agencement pour la fixation d'un balai d'essuie glace muni d'un tel adaptateur sur un bras.

Elle concerne plus précisément un adaptateur pour la fixation d'un balai d'essuie glace sur un bras, ce balai comportant un axe de pivotement transversal destiné à la liaison pivotante avec le bras.

De façon connue, un tel balai est adaptée à un type de bras spécifique dit à chape car comportant une extrémité en profilé en U en tôle d'acier réalisé par roulage autour du bras. Selon un mode de réalisation connu, une pièce indépendante dite adaptateur est montée sur le balai, cet adaptateur étant pourvu d'orifices en vis à vis sur ses ailes et destinés à s'encliqueter sur l'axe et l'extrémité du bras en U est emboîtée et bloquée sur cet adaptateur, l'ouverture du U étant dirigée vers le balai. Or ces bras à chape sont complexes et onéreux, quant à leur fabrication.

Le document US-A-4094039 enseigne un adaptateur destiné à connecter un balai d'essuie-glace avec un bras tige par enfichage de ce dernier. L'adaptateur comprend un corps principal de section sensiblement en U et comporte des moyens de blocage longitudinal réalisés dans un manchon d'enfichage s'étendant à partir du corps principal vers une extrmité libre. Ces moyens de blocages se présentent sous la forme d'un ergot ménagé au droit d'un tenon d'une lame metallique flexible.

Le document FR-A-2070567 enseigne un dispositif de verrouillage entre un balai d'essuie-glace et son bras oscillant, la tige d'extremité du bras étant destinée à être enfichée longitudinalement dans une pièce de liaison qui présente un orifice unique destiné à recevoir un axe d'articulation pour une liaison pivotante avec le balai d'essuie-glace. La pièce de liaison comporte une branche longue et creuse recevant la tige du bras oscillant. Cette branche comporte deux parois opposées aménagées de manière à former chacune une lame élastique munie chacune d'un moyen de blocage longitudinal.

Pour résoudre ce problème et permettre le montage de bras de conception particulièrement simple que sont les bras à tige d'extrémité, l'invention propose un adaptateur pour la fixation d'un balai d'essuie glace, par liaison pivotante autour d'un axe, sur un bras présentant les caractéristiques de la revendication 1.

L'adaptateur proposé présente, de manière classique, une section en U dont les ailes comportent chacune un orifice d'encliquetage sur le l'axe et dont une extrémité dite extrémité d'entrée est ouverte et l'adaptateur comporte des moyens de blocage transversal et longitudinal du bras.

Selon l'invention, les premiers moyens de blocage longitudinal sont constitués d'une partie articulée pourvue d'un tenon venant s'emboîter dans un orifice agencé sur la tige, lorsque celle-ci est enfichée.

Dans ce cas, de manière intéressante, ce moyen de blocage est constitué d'une traverse articulée sur l'adaptateur formant avec l'âme de l'adaptateur à son extrémité d'entrée un canal de positionnement de la tige.

Selon l'invention, les seconds moyens de blocage longitudinal sont constitués d'un logement agencé sur l'adaptateur dans lequel vient en prise une butée de la tige, lorsque celle-ci est enfichée.

Dans ce cas, ledit logement est agencé sur l'âme de l'adaptateur à proximité de son extrémité opposée à celle d'entrée et ladite butée est agencée à l'extrémité de la tige.

Le logement peut être conformé grâce à une nervure d'encliquetage profilée sur la surface interne de l'adaptateur et la butée peut être un cliquet profilé à l'extrémité de la tige.

De plus, de préférence, l'adaptateur comporte au moins une traverse fixe formant les moyens de blocage transversal de la tige.

De préférence, l'âme de l'adaptateur est pourvue d'une ouverture longitudinale permettant le passage de la tige lors de son enfichage.

L'invention concerne également un agencement de fixation et un bras d'essuyage portant un tel adaptateur.

L'invention est décrite ci-après plus en détail à l'aide de figures représentant un mode de réalisation possible de l'invention.

La figure 1 est une vue en perspective de l'agencement de fixation conforme à l'invention.

La figure 2 est une vue analogue en perspective en coupe longitudinale.

La figure 3 est une vue en coupe longitudinale de l'agencement de fixation conforme à l'invention.

Les figures 4 à 6 sont des vues de face illustrant l'enfichage de la tige du bras.

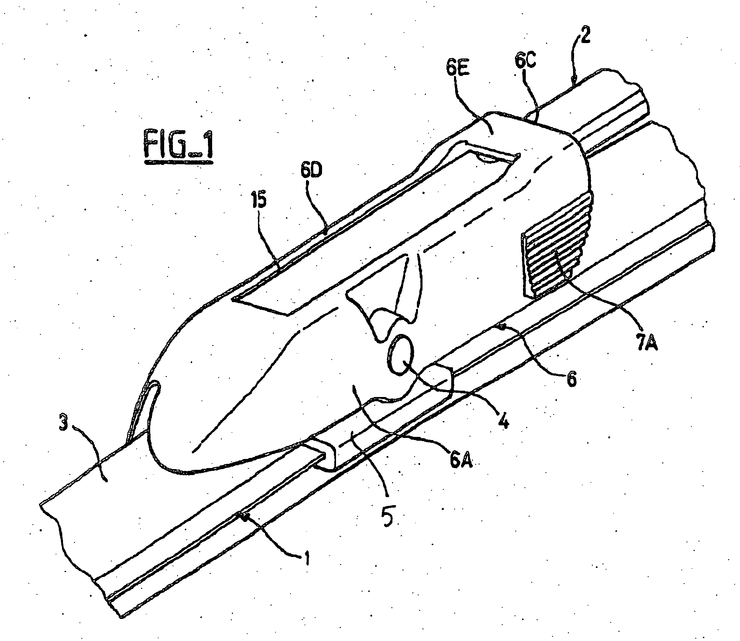

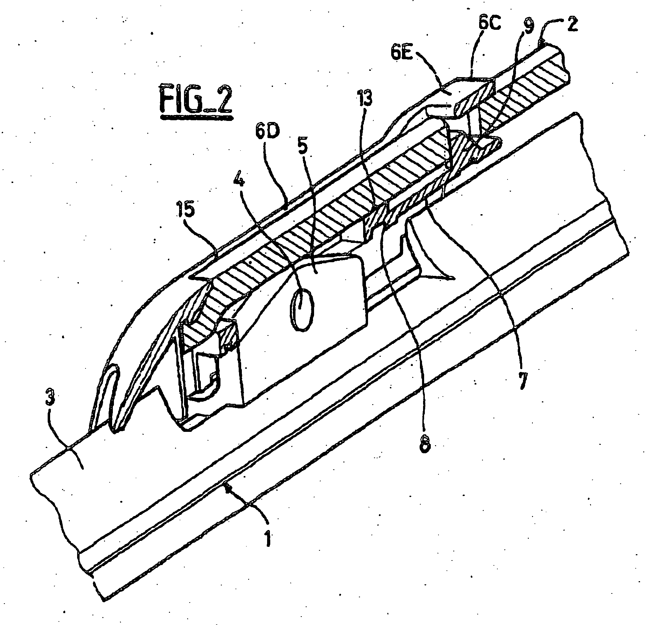

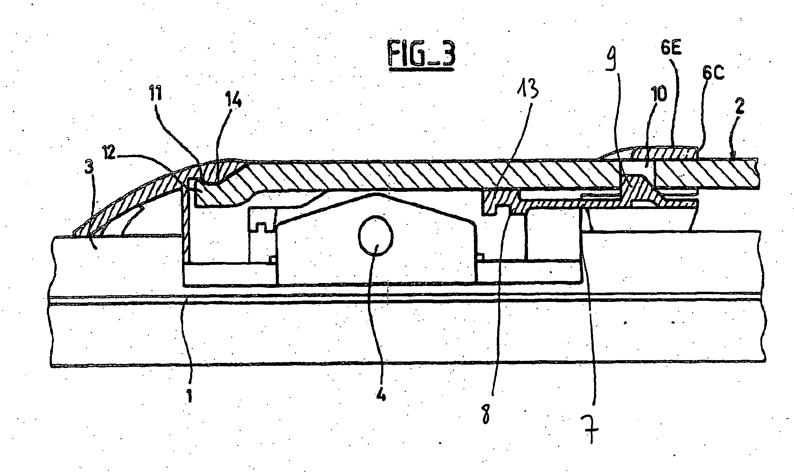

L'adaptateur selon l'invention est représentée sur les figures 1 à 3.

Sur un balai (1,3,5,4) est monté un bras 2. Ce bras 2 lié de façon connue à un entraînement de rotation permet le déplacement du balai sur la vitre d'un véhicule automobile, en particulier. Ce balai (1,3,5,4) est d'un type connu et comporte un axe de pivotement transversal traversant 4 fixé à une pièce 5 solidaire des pièces 1 et 3 constituées de la lame d'essuyage et de sa vertèbre de renforcement. Un tel balai est de façon connue destinée à recevoir une pièce indépendante dite adaptateur sur laquelle est emboîtée un bras à chape.

L'invention permet de monter un bras d'extrémité en tige par enfichage dans un adaptateur 6.

Pour ce faire, l'adaptateur 6 en matière plastique est une pièce de section en U dont les ailes 6A, 6B comportent chacune un orifice d'encliquetage sur l'axe 4 et dont une extrémité 6C dite extrémité d'entrée est ouverte. Cette extrémité d'entrée 6C est destinée à recevoir la tige d'extrémité du bras 2.

L'adaptateur 6 comporte également des moyens de blocage transversal et longitudinal du bras enfiché.

Un premier moyen de blocage longitudinal est constitué d'une partie articulée constituée d'une traverse 7 articulée sur l'adaptateur par au moins une languette flexible 8 et portant un tenon 9. Comme il sera décrit plus loin plus précisément, ce tenon 9 vient s'emboîter dans un orifice 10 agencé sur la tige 2, lorsque celle-ci est enfichée. Cette traverse 7 forme avec l'âme 6D de l'adaptateur à son extrémité d'entrée 6C un canal de positionnement de la tige.

Un deuxième moyen de blocage longitudinal est constitué d'un logement 11 agencé sur la surface interne de l'âme 6D de l'adaptateur et dans lequel vient en prise une butée 12 de la tige, lorsque celle-ci est enfichée. Ce logement 11 est agencé à proximité de l'extrémité opposée à celle d'entrée 6C et cette butée 12 est agencée à l'extrémité de la tige du bras 2. Avantageusement, ce logement 11 est conformé grâce à une nervure d'encliquetage profilée 14 et cette butée 12 est un cliquet profilé à l'extrémité de la tige.

L'adaptateur comporte également au moins une traverse fixe 13 de blocage transversal de la tige. Cette traverse 13 est agencée à un emplacement libre entre les deux extrémités de l'adaptateur, compte tenu de l'encombrement de la pièce 5 support de l'axe 4.

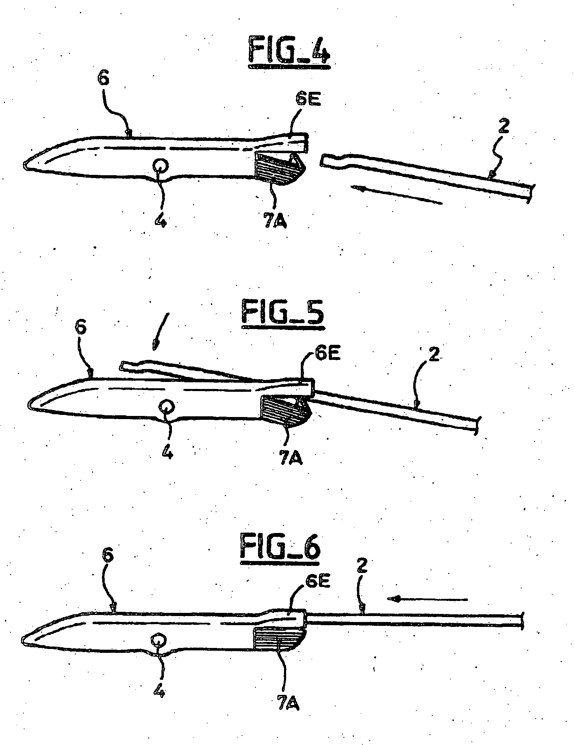

L'âme 6D de l'adaptateur est pourvue d'une ouverture longitudinale 15 permettant le passage et la mise en place de la tige lors de son enfichage comme il va être maintenant décrit en référence aux figures 4 à 6.

L'adaptateur 6 est monté sur le bras 2 après son encliquetage sur l'axe 4. Pour ce faire, comme représenté sur la figure 4, le canal de positionnement formé par la traverse 7 et l'âme 6D de l'adaptateur est ouvert par déplacement de la traverse 7 vers le bas (vu selon la figure) grâce à la déformation élastique de la languette 8. Pour aider à cette manipulation, les flancs de la traverse 7 sont pourvus de nervures de préhension 7A.

Son extrémité inclinée vers le haut (vu selon la figure), l'extrémité de la tige du bras 2 est introduite dans ce canal sur une certaine longueur et passe dans l'ouverture longitudinale 15. Ainsi la tige est enfichée aisément au-dessus de la traverse fixe 13. Lorsque l'extrémité de la tige est à proximité de l'extrémité de l'ouverture 15 opposée à l'ouverture d'entrée 6C, comme représenté sur la figure 5, la tige est rabattue vers l'intérieur de l'adaptateur.

II suffit ensuite de la pousser longitudinalement, comme représenté sur la figure 6, pour venir encliqueter sa butée 12 dans le logement 11 de l'adaptateur.

Avantageusement, la tige du bras 2 et l'adaptateur 6 sont profilés pour que la tige enfichée affleure la surface extérieure de l'âme 6D au niveau de l'ouverture longitudinale 15 de l'âme 6D de l'adaptateur, ceci dans un souci d'aérodynamique, d'esthétique et d'encombrement. La tige est donc non rectiligne, de forme inclinée à son extrémité afin de venir se loger sous l'âme 6D de l'adaptateur. L'adaptateur quant à lui est surélevé à proximité de son ouverture d'entrée 6C où il forme un pont 6E entre l'ouverture d'entrée 6C et l'ouverture longitudinale 15.

## Revendications

1. Adaptateur (6), destiné à la fixation d'un balai (1, 3, 4, 5) d'essuie-glace, par liaison pivotante autour d'un axe (4), sur un bras (2) comportant une tige d'extrémité destinée à être enfichée longitudinalement dans l'adaptateur, dans lequel,
- l'adaptateur (6) est destiné à être monté sur le balai (1, 3, 5, 4), le balai comportant l'axe (4) de pivotement transversal traversant ;
- l'adaptateur (6) est de section sensiblement en U dont les ailes (6A, 6B) comportent chacune un orifice d'encliquetage sur l'axe (4) et dont une extrémité dite extrémité d'entrée (6C) est ouverte pour l'enfichage de la tige d'extrémité du bras (2) ; et dans lequel,
- l'adaptateur (6) comporte des moyens de blocage transversal et des moyens de blocage longitudinal du bras (2), les moyens de blocage longitudinal étant constitués d'une partie articulée (7) pourvue d'un tenon (9) venant s'emboîter dans un orifice (10) agencé sur la tige, lorsque celle-ci est enfichée;
l'adaptateur (6) étant en matière plastique et comportant en outre des seconds moyens de blocage longitudinal constitués d'un logement (11) agencé sur la surface interne de l'âme (6D) de l'adaptateur (6) à proximité de son extrémité opposée à l'extrémité d'entrée (6C) dans lequel vient en prise une butée (12) de la tige, lorsque celle-ci est enfichée, ladite butée (12) est agencée à l'extrémité de la tige.

2. Adaptateur selon la revendication précédente, **caractérisé en ce que** ledit logement (11) est conformé grâce à une nervure d'encliquetage profilée (14) sur la surface interne de l'adaptateur (6) et ladite butée (12) est un cliquet profilé à l'extrémité de la tige.

3. Adaptateur selon l'une quelconque des revendications précédentes, **caractérisé en ce que** l'adaptateur (6) comporte au moins une traverse fixe (13) formant les moyens de blocage transversal de la tige.

4. Adaptateur selon la revendication précédente **caractérisé en ce que** la traverse (13) est agencée à un emplacement libre entre les deux extrémités de l'adaptateur (6).

5. Bras d'essuyage sur lequel est monté un adaptateur (6) **caractérisé en ce que** l'adaptateur présente les caractéristiques de l'une quelconque des revendications 1 à 4.

6. Bras d'essuyage selon la revendication précédente **caractérisé en ce que** la tige est de forme inclinée à son extrémité afin de venir se loger sous l'âme (6D) de l'adaptateur.

7. Agencement de fixation d'un balai d'essuie-glace sur un bras **caractérisé en ce qu'**il comporte un adaptateur (6) selon l'une quelconque des revendications 1 à 4.

## Patentansprüche

1. Adapter (6), der für die Befestigung eines Scheibenwischerblatts (1, 3, 4, 5) eines Scheibenwischers durch eine Schwenkverbindung um eine Achse (4) an einem Arm (2) bestimmt ist, der eine Stange aufweist, die dazu bestimmt ist, längs in den Adapter eingesteckt zu werden, wobei
- der Adapter (6) dazu bestimmt ist, auf das Scheibenwischerblatt (1, 3, 5, 4) montiert zu werden, wobei das Scheibenwischerblatt die in Querrichtung verlaufende Durchgangsschwenkachse (4) aufweist;
- der Adapter (6) einen im Wesentlichen U-förmigen Querschnitt hat, dessen Schenkel (6A, 6B) jeweils eine Öffnung zum Einklinken auf der Achse (4) aufweisen, und von dem ein als Eingangsende (6C) bezeichnetes Ende zum Einstecken der Stange des Arms (2) offen ist, und wobei
- der Adapter (6) transversale Blockiermittel und longitudinale Blockiermittel für den Arm (2) aufweist, wobei die longitudinalen Blockiermittel aus einem auslenkbaren Teil (7) bestehen, der mit einem Zapfen (9) versehen ist, der sich in eine an der Stange ausgebildete Öffnung (10) einfügt, wenn diese eingesteckt ist,
wobei der Adapter (6) aus einem Kunststoffmaterial besteht und ferner zweite longitudinale Blockiermittel aufweist, die aus einer Aufnahme (11) bestehen, die auf der inneren Fläche des Kerns (6D) des Adapters (6) in der Nähe seines dem Eingangsende (6C) entgegengesetzten Endes ausgebildet ist, in die in Eingriff kommt ein Anschlag (12) der Stange, wenn diese eingesteckt ist, und wobei der Anschlag (12) am Ende der Stange ausgebildet ist.

2. Adapter nach dem vorhergehenden Anspruch,
**dadurch gekennzeichnet, dass** die Aufnahme (11) mittels einer profilierten Einklinkrippe (14) auf der inneren Fläche des Adapters (6) geformt ist, und der Anschlag (12) eine Profilklinke am Ende der Stange ist.

3. Adapter nach einem der vorhergehende Ansprüche,
**dadurch gekennzeichnet, dass** der Adapter (6) mindestens einen feststehenden Querträger (13) umfasst, der die transversalen Blockiermittel bildet.

4. Adapter nach dem vorhergehende Anspruch,
**dadurch gekennzeichnet, dass** der Querträger (13) an einer freien Stelle zwischen den beiden Enden des Adapters (6) ausgebildet ist.

5. Wischarm, an dem ein Adapter (6) montiert ist,
**dadurch gekennzeichnet, dass** der Adapter die Merkmale eines beliebigen der Ansprüche 1 bis 4 aufweist.

6. Wischarm nach dem vorhergehende Anspruch,
**dadurch gekennzeichnet, dass** die Stange an ihrem Ende schräg gestaltet ist, um sich unter dem Kern (6D) des Adapters anzuordnen.

7. Befestigungsanordnung eines Scheibenwischerblatts an einem Arm,
**dadurch gekennzeichnet, dass** sie einen Adapter (6) nach einem der Ansprüche 1 bis 4 umfasst.

## Claims

1. Adaptor (6), intended for fixing a windscreen wiper blade (1, 3, 4, 5), by pivoting connection around an axis (4), on an arm (2) having an end rod intended to be fitted longitudinally in the adaptor, in which,
- the adaptor (6) is intended to be mounted on said blade (1, 3, 5, 4), the blade having the transverse axis (4) passing through;
- the adaptor (6) has a substantially U-shaped cross section whose flanges (6A, 6B) each comprise an orifice for locking onto said axis (4) and an end of which, referred to as the entry end (6C), is open for plugging in the end rod of the arm (2); and in which,
- the adaptor (6) comprises transversal locking means and longitudinal locking means of the said arm (2); said longitudinal locking means consisting of an articulated part (7) provided with a tenon (9) which engages an orifice (10) arranged on the rod, when the latter is plugged in;
the adaptor (6) being made of plastic and also comprising second longitudinal locking means consisting of a housing (11) arranged on the internal surface of the web (6D) of the adaptor (6) close to its end opposite to the entry end (6C) in which a stop (12) on the rod locks into engagement, when the latter is plugged in, the said stop (12) being arranged at the end of the rod.

2. Adaptor according to the preceding claim,
**characterized in that** said housing (11) is formed by virtue of a profiled snapping rib (14) on the internal surface of the adaptor (6) and said stop (12) is a profiled catch at the end of the rod.

3. Adaptor according to either of the preceding claims,
**characterized in that** the adaptor (6) comprises at least one fixed cross-member (13) forming the transverse locking means of the rod.

4. Adaptor according to the preceding claim,
**characterized in that** the cross-member (13) is arranged in a free space between the two ends of the adaptor (6).

5. Windscreen wiper arm on which an adaptor (6) is mounted,
**characterized in that** the adaptor comprises the characteristics of any one of Claims 1 to 4.

6. Windscreen wiper arm according to the preceding claim,
**characterized in that** the rod has an inclined shape at its end in order to be nested below the web (6D) of the adaptor (6).

7. Arrangement for fixing a windscreen wiper blade on an arm,
**characterized in that** it comprises an adaptor (6) according to any one of Claims 1 to 4.
